(19) Europäisches Patentamt European Patent Office Office européen des brevets

(11) **EP 4 572 054 A1**

(12) **EUROPEAN PATENT APPLICATION**
published in accordance with Art. 153(4) EPC

(43) Date of publication:
**18.06.2025 Bulletin 2025/25**

(21) Application number: **23852306.2**

(22) Date of filing: **14.07.2023**

(51) International Patent Classification (IPC):
*H02H 3/087* (2006.01)    *B60R 16/02* (2006.01)
*H02H 7/18* (2006.01)    *H02J 1/00* (2006.01)

(52) Cooperative Patent Classification (CPC):
**B60R 16/02; H02J 1/00;** H02H 3/087

(86) International application number:
**PCT/JP2023/025997**

(87) International publication number:
**WO 2024/034325 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022  JP 2022128994**

(71) Applicant: **Panasonic Intellectual Property Management Co., Ltd.**
**Kadoma-shi, Osaka 571-0057 (JP)**

(72) Inventors:
• **WATANABE, Keisuke**
  **Kadoma-shi, Osaka 571-0057 (JP)**
• **KOHDA, Shinichi**
  **Kadoma-shi, Osaka 571-0057 (JP)**
• **WADA, Takuya**
  **Kadoma-shi, Osaka 571-0057 (JP)**

(74) Representative: **Novagraaf International SA**
**Chemin de l'Echo 3**
**1213 Onex, Geneva (CH)**

(54) **SHUTOFF SYSTEM**

(57)    A shutoff system (1) that shuts off a current path includes a shunt resistor (10) provided in the current path, and a pyroswitch (20) that includes an internal resistor (21a) and shuts off the current path by performing detonation in accordance with a current that flows in the internal resistor (21a). The shunt resistor (10) and the internal resistor (21a) are connected in parallel to each other.

FIG. 3

EP 4 572 054 A1

**Description**

[Technical Field]

The present disclosure relates to a shutoff system that shuts off a current path.

[Background Art]

Patent Literature (PTL) 1 describes a current shutoff system that includes a shunt resistor, a threshold value detector, and a pyroswitch. The shunt resistor measures the value of the current that flows from a battery to a motor. The threshold value detector determines whether the current value measured by the shunt resistor exceeds a threshold value set in advance. The pyroswitch cuts off the shunt resistor in response to the threshold value detector determining that the current value has exceeded the threshold value.

[Citation List]

[Patent Literature]

[PTL 1]
Japanese Unexamined Patent Application Publication No. 2020-100339

[Summary of Invention]

[Technical Problem]

In recent years, there has been an increasing demand for smaller, simpler current path shutoff systems. The system described in PTL 1 above, however, does not easily lend itself to simplification and size reduction since it requires a function (e.g., a microcomputer or the like) that determines whether the current value measured by the shunt resistor has exceeded the threshold value set in advance, an energy source for instantly driving the pyroswitch, and an isolation function (e.g., an isolation amplifier or the like) between a high voltage portion and a low voltage portion.
Accordingly, the present disclosure provides a shutoff system that can lend itself to simplification and size reduction.

[Solution to Problem]

A shutoff system according to one aspect of the present disclosure is a shutoff system that shuts off a current path, and the shutoff system includes: a shunt resistor provided in the current path; and a pyroswitch that includes an internal resistor and shuts off the current path by performing detonation in accordance with a current that flows in the internal resistor, wherein the shunt resistor and the internal resistor are connected in parallel to each other.

[Advantageous Effects of Invention]

The shutoff system according to one aspect of the present disclosure makes it possible to provide a smaller, simpler shutoff system.

[Brief Description of Drawings]

[FIG. 1]

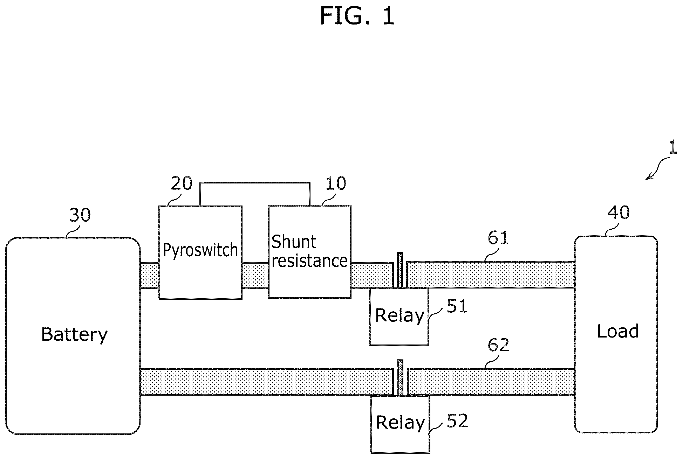

FIG. 1 is a configuration diagram showing one example of a shutoff system according to Embodiment 1.
[FIG. 2]

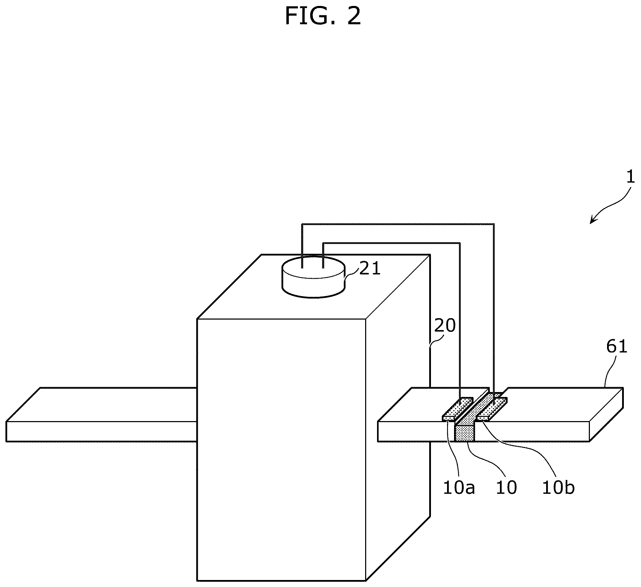

FIG. 2 is a perspective view showing one example of a shutoff system according to Embodiment 1.
[FIG. 3]

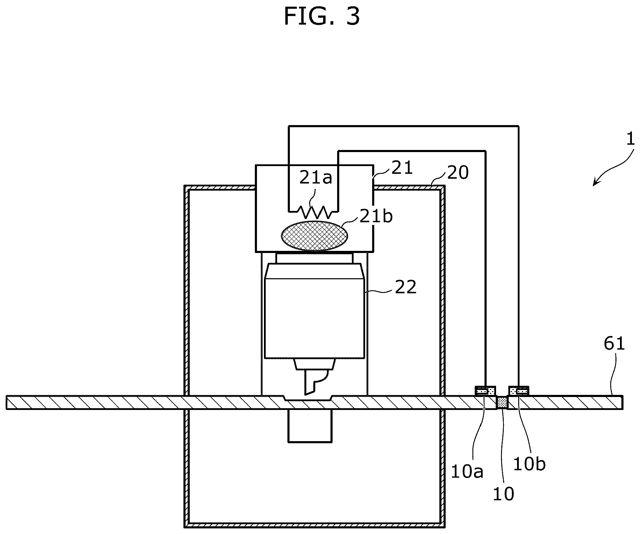

FIG. 3 is a sectional view showing one example of a shutoff system according to Embodiment 1.
[FIG. 4]

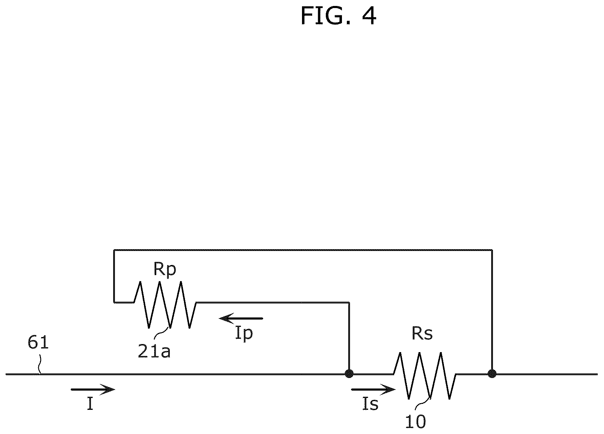

FIG. 4 is an equivalent circuit diagram of the part where a shunt resistor and an internal resistor are provided in a shutoff system according to Embodiment 1.

[FIG. 5A]

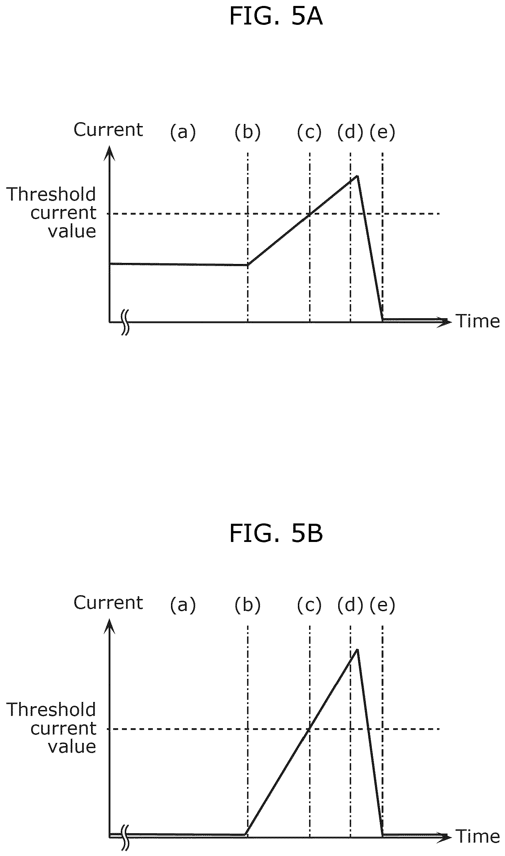

FIG. 5A is a diagram showing one example of a change in the current that flows in a busbar when an anomaly occurs according to a comparative example.
[FIG. 5B]
FIG. 5B is a diagram showing another example of a change in the current that flows in a busbar when an anomaly occurs according to a comparative example.
[FIG. 6A]

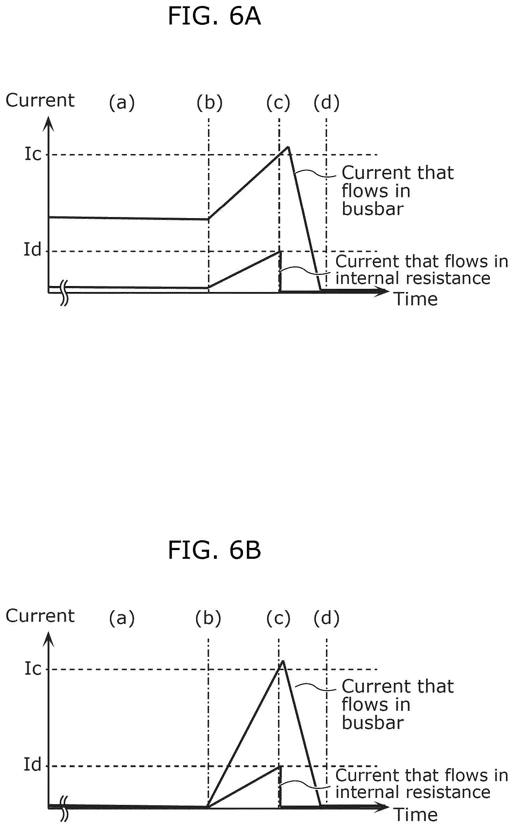

FIG. 6A is a diagram showing one example of a change in the current that flows in a busbar and in the current that flows in an internal resistor when an anomaly occurs according to Embodiment 1.
[FIG. 6B]
FIG. 6B is a diagram showing another example of a change in the current that flows in a busbar and in the current that flows in an internal resistor when an anomaly occurs according to Embodiment 1.
[FIG. 7]

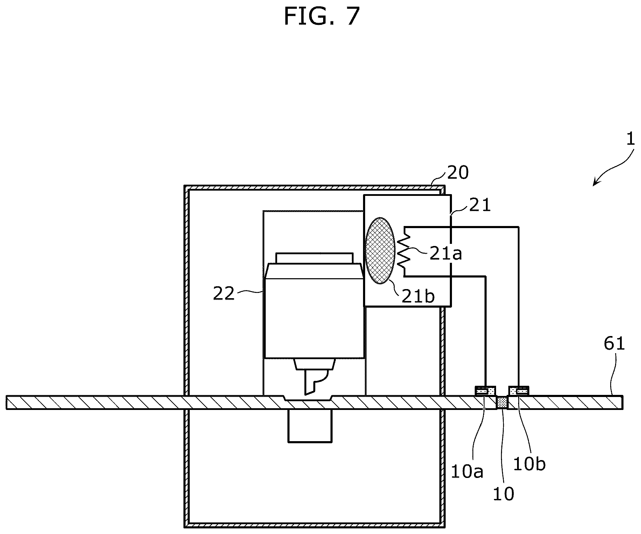

FIG. 7 is a sectional view showing another example of a shutoff system according to Embodiment 1.
[FIG. 8]

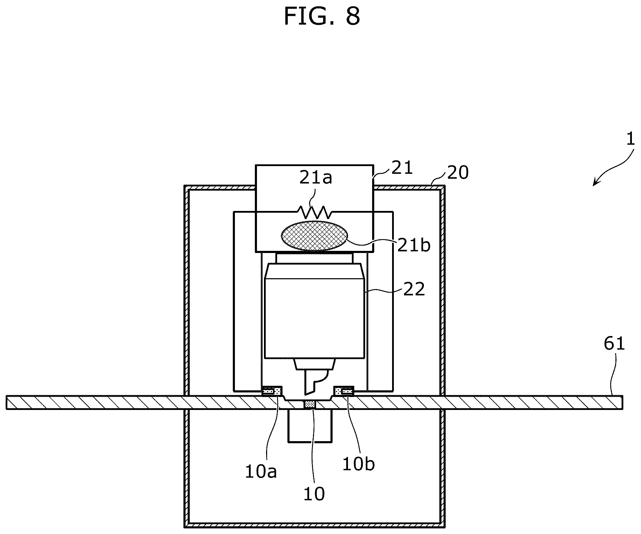

FIG. 8 is a sectional view showing another example of a shutoff system according to Embodiment 1.
[FIG. 9]

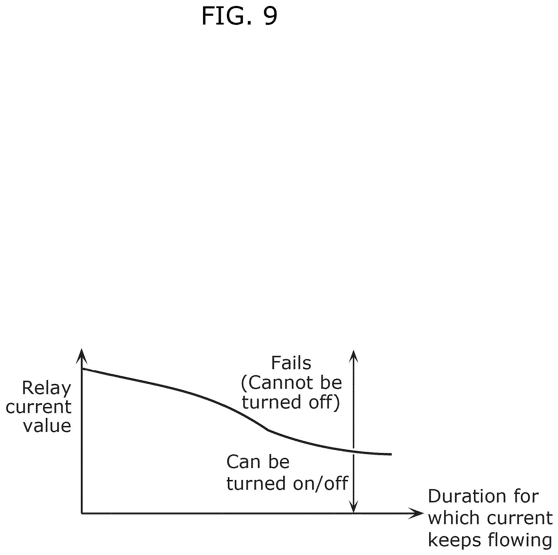

FIG. 9 is a diagram showing one example of a characteristic of a relay.
[FIG. 10]

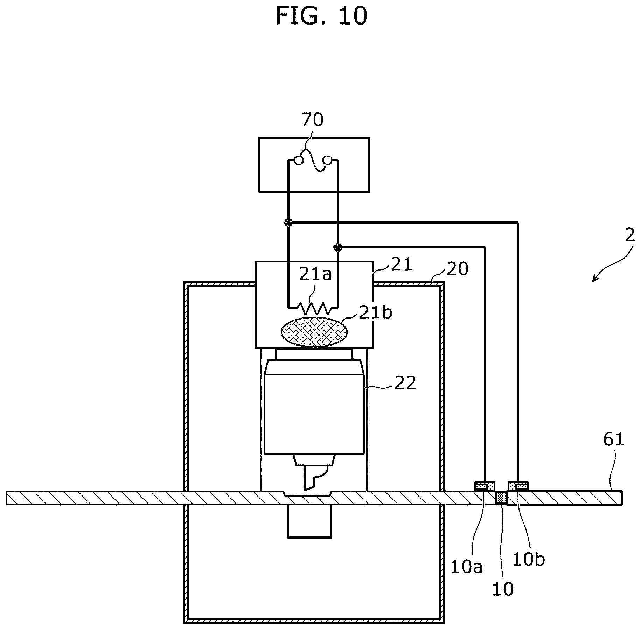

FIG. 10 is a sectional view showing one example of a shutoff system according to Embodiment 2.
[FIG. 11]

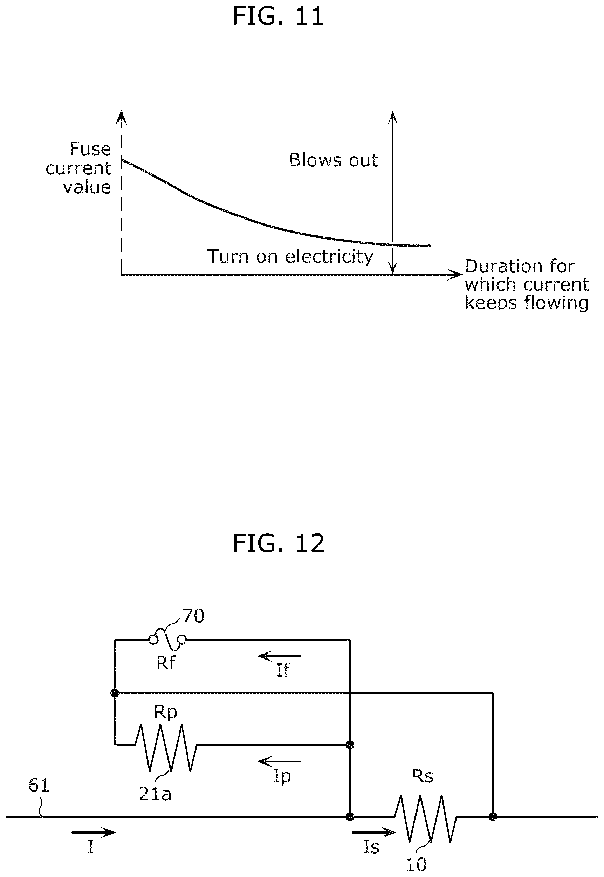

FIG. 11 is a diagram showing one example of a characteristic of a blowout fuse according to Embodiment 2.
[FIG. 12]
FIG. 12 is an equivalent circuit diagram showing one example of the part where a shunt resistor, an internal resistor, and a blowout fuse are provided in a shutoff system according to Embodiment 2.
[FIG. 13A]

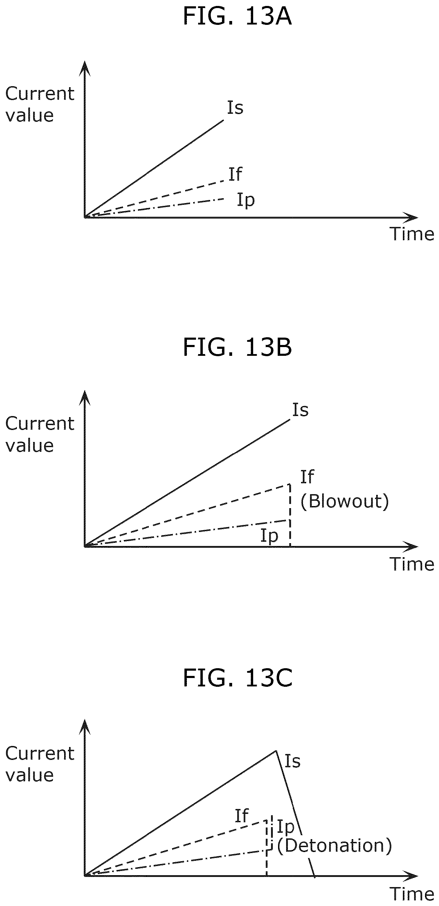

FIG. 13A is a diagram for describing a change in the current that flows in a shunt resistor, in the current that flows in an internal resistor, and in the current that flows in a blowout fuse when an anomaly occurs according to Embodiment 2.
[FIG. 13B]
FIG. 13B is a diagram for describing a change in the current that flows in a shunt resistor, in the current that flows in an internal resistor, and in the current that flows in a blowout fuse when an anomaly occurs according to Embodiment 2.
[FIG. 13C]
FIG. 13C is a diagram for describing a change in the current that flows in a shunt resistor, in the current that flows in an internal resistor, and in the current that flows in a blowout fuse when an anomaly occurs according to Embodiment 2.
[FIG. 14A]

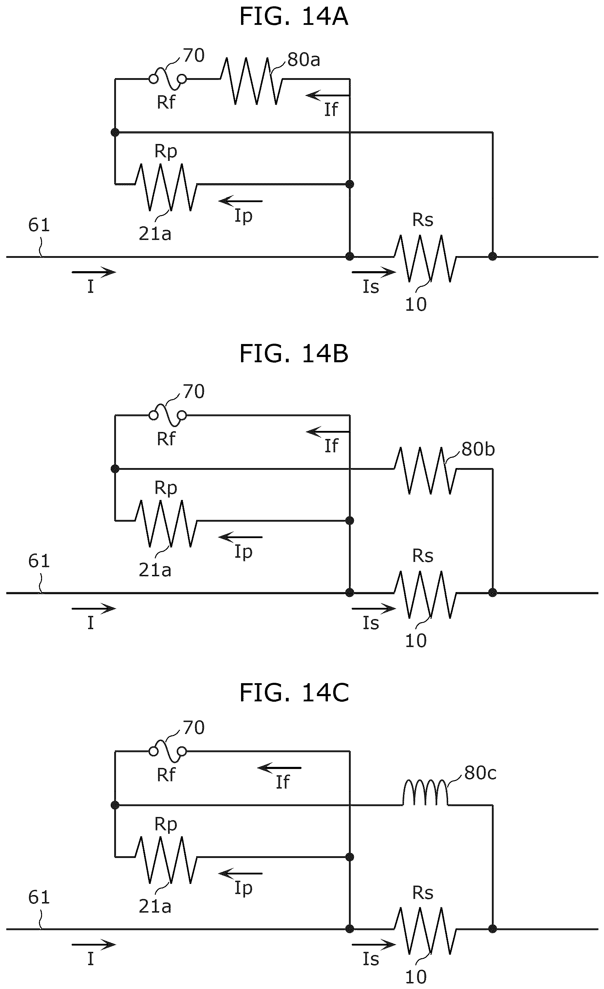

FIG. 14A is an equivalent circuit diagram showing another example of the part where a shunt resistor, an internal resistor, and a blowout fuse are provided in a shutoff system according to Embodiment 2.
[FIG. 14B]
FIG. 14B is an equivalent circuit diagram showing another example of the part where a shunt resistor, an internal resistor, and a blowout fuse are provided in a shutoff system according to Embodiment 2.
[FIG. 14C]
FIG. 14C is an equivalent circuit diagram showing another example of the part where a shunt resistor, an internal resistor, and a blowout fuse are provided in a shutoff system according to Embodiment 2.

[Description of Embodiments]

Hereinafter, some embodiments will be described in specific terms with reference to the drawings.
It is to be noted that the embodiments described below merely illustrate general or specific examples. The numerical values, the shapes, the materials, the constituent elements, the arrangement positions and the connection modes of the constituent elements, and so forth illustrated according to the following embodiments are examples and are not intended to limit the present disclosure.

[Embodiment 1]

Shutoff system 1 according to Embodiment 1 will be described with reference to FIG. 1 to FIG. 8.
FIG. 1 is a configuration diagram showing one example of shutoff system 1 according to Embodiment 1. Although FIG. 1 shows battery 30, load 40, relays 51 and 52, and busbars (copper bars, copper parts) 61 and 62, these components do not need to be constituent elements of shutoff system 1. In other words, it suffices that shutoff system 1 include at least shunt resistor 10 and pyroswitch 20.

Shutoff system 1 is provided, for example, in a vehicle, such as an electric vehicle, that uses electric power for propulsive driving. The vehicle, such as an electric vehicle, is provided with high voltage, large capacity battery 30, and as electric power is supplied from battery 30 to load 40, the vehicle, such as an electric vehicle, is propulsively driven. When an accident or the like occurs, there is a chance that a large current caused by a short circuit anomaly flows in a current path connecting battery 30 and load 40 and battery 30 emits smoke or sparks, and hence shutoff system 1 is provided to shut off the aforementioned current path.

A short circuit anomaly occurs, for example, when load 40 becomes short-circuited to the ground (e.g., a chassis or the like), when a part, within load 40, that is connected to busbar 61 and another part, within load 40, that is connected to busbar 62 become short-circuited, when relay 51 or 52 becomes fused and relay 51 or 52 cannot be turned off when a large current flows in busbar 61 or 62, or when busbar 61 and busbar 62 become short-circuited.

Load 40 is a load such as a converter or an inverter that uses energy in or charges energy into high voltage, large capacity battery 30.

Busbars 61 and 62 are each an example of a current path that connects battery 30 and load 40. For example, busbar 61 connects load 40 and the cathode-side terminal of battery 30, and busbar 62 connects load 40 and the anode-side terminal of battery 30.

Furthermore, busbar 61 is physically discontinuous by relay 51 and is constituted by a plurality of busbars. Similarly, busbar 62 is physically discontinuous by relay 51 and is constituted by a plurality of busbars. Moreover, other parts of busbars 61 and 62 may, rather than having an integral structure, be constituted by coupling (connecting) a plurality of busbars.

Relays 51 and 52 are each a switch that switches between on and off of the supply of electric power from battery 30 to load 40. For example, when an electric vehicle is started, relays 51 and 52 are turned on, and electric power starts being supplied to load 40.

Shunt resistor 10 is a sensor that is provided in busbar 61 and detects the current value of the current that flows in busbar 61. Shunt resistor 10 can generate a voltage corresponding to the current that flows in busbar 61 and detect this voltage as the current that flows in busbar 61.

Pyroswitch 20 is an electrical component for cutting off busbar 61 when a large current caused by a short circuit anomaly flows in busbar 61. Pyroswitch 20 includes therein explosive charge 21b (see FIG. 3 and so on described later), and by igniting explosive charge 21b, irreversibly severs busbar 61 with the explosive power caused by the explosive charge ignition to shut off busbar 61. Specifically, pyroswitch 20 includes internal resistor 21a (see FIG. 3 and so on described later), and by performing detonation in accordance with the current that flows in internal resistor 21a, shuts off busbar 61.

Shunt resistor 10 and pyroswitch 20 are connected to each other, and although details will be described later, shunt resistor 10 and internal resistor 21a of pyroswitch 20 are connected in parallel to each other.

As shown in FIG. 1, shutoff system 1 does not include a function (e.g., a microcomputer or the like) that determines whether the current value detected by shunt resistor 10 has exceeded a threshold value set in advance, an energy source for instantly driving pyroswitch 20, or an isolation function (e.g., an isolation amplifier or the like) between a high voltage portion and a low voltage portion, but shutoff system 1 can shut off busbar 61 when a large current flows in busbar 61.

Herein, shunt resistor 10 may be provided in busbar 62, and pyroswitch 20 may shut off busbar 62 when a large current caused by a short circuit anomaly flows in busbar 62.

FIG. 2 is a perspective view showing one example of shutoff system 1 according to Embodiment 1.

FIG. 3 is a sectional view showing one example of shutoff system 1 according to Embodiment 1. FIG. 3 shows the structure inside detonator 21 schematically and omits showing the section of detonator 21 and of cutter 22.

As shown in FIG. 2 and FIG. 3, pyroswitch 20 includes a housing (e.g., a rectangular parallelepiped-shaped housing), and busbar 61 extends so as to penetrate through the side walls of the housing. Pyroswitch 20 is provided with internal resistor 21a and includes detonator 21 that carries out detonation. Detonator 21 is provided, for example, in the top wall of the housing. Internal resistor 21a produces heat as a current of a prescribed magnitude or higher flows in internal resistor 21a, and as explosive charge 21b is ignited by that heat to produce explosive power, the cutting blade of cutter 22 of pyroswitch 20 is pushed down instantly. With this operation, pyroswitch 20 can shut off busbar 61.

Shunt resistor 10 is connected, for example, to terminals 10a and 10b. Specifically, terminal 10a is connected to one end of shunt resistor 10, and terminal 10b is connected to the other end of shunt resistor 10. Furthermore, terminal 10a is connected to one end of internal resistor 21a, and terminal 10b is connected to the other end of internal resistor 21a. This configuration can connect shunt resistor 10 and internal resistor 21a in parallel to each other. For example, the one end of shunt resistor 10 (terminal 10a) and the one end of internal resistor 21a are connected directly to each other without any other elements therebetween, and the other end of shunt resistor 10 (terminal 10b) and the other end of internal resistor 21a are connected directly to each other without any other elements therebetween.

FIG. 4 is an equivalent circuit diagram of the part where shunt resistor 10 and internal resistor 21a are provided in shutoff system 1 according to Embodiment 1.

As can be seen in the equivalent circuit diagram of FIG. 4 as well, shunt resistor 10 and internal resistor 21a are connected in parallel to each other.

For example, the resistance value of shunt resistor 10 takes a value that is based on the resistance value of internal resistor 21a, an anomalous current value set for the current that flows in busbar 61, and the current value, of the current that flows in internal resistor 21a, that is necessary for detonation. Since shunt resistor 10 and internal resistor 21a are connected in parallel to each other, the current that flows in internal resistor 21a varies in accordance with the current that flows in busbar 61. In other words, shutoff system 1 varies the magnitude of the current that flows in internal resistor 21a in accordance with the magnitude of the current that flows in busbar 61.

Now, when the current that flows in busbar 61 is denoted by I, the current that flows in shunt resistor 10 is denoted by Is, the current that flows in internal resistor 21a is denoted by Ip, the resistance value of shunt resistor 10 is denoted by Rs, and the resistance value of internal resistor 21a is denoted by Rp, the current that flows in internal resistor 21a is expressed by Equation 1 below.

$$Ip = I \times Rs/(Rs + Rp) \quad \text{(Equation 1)}$$

In addition, the anomalous current value set for the current that flows in busbar 61 (i.e., the current value to be had when busbar 61 is to be shut off) is denoted by Ic and the current value, of the current that flows in internal resistor 21a, that is necessary for detonation (i.e., the current value to be had when explosive charge 21b is to be ignited) is denoted by Id, the resistance value of shunt resistor 10 is expressed by Equation 2 below based on Equation 1.

$$Rs = Rp \times Id/(Ic - Id) \quad \text{(Equation 2)}$$

In this manner, as the resistance value of shunt resistor 10 is adjusted as in Equation 2, the anomalous current value at which busbar 61 should be shut off can be set. When an overcurrent of the anomalous current value flows in busbar 61, pyroswitch 20 performs detonation by this overcurrent. For example, when the resistance value of internal resistor 21a is 2 Ω and the current value, of the current that flows in internal resistor 21a, that is necessary for detonation is 2 A, and when the current value at which busbar 61 is to be shut off is to be set to 10,000 A, the resistance value of shunt resistor 10 turns out to be about 0.0004 Ω based on Equation 2. Then, when a current of 10,000 A flows in busbar 61, a current of 2 A flows in internal resistor 21a, and pyroswitch 20, by performing detonation, can shut off busbar 61.

FIG. 5A is a diagram showing one example of a change in the current that flows in busbar 61 when an anomaly occurs according to a comparative example. FIG. 5A shows a change in the current that flows in busbar 61 when relays 51 and 52 are on.

According to the comparative example, whether the current value detected in shunt resistor 10 has exceeded the threshold current value set in advance is determined by a microcomputer or the like, and busbar 61 is shut off when the current value detected in shunt resistor 10 has exceeded the threshold current value. As shown in FIG. 5A, in one case, a normal current flows in busbar 61 in period (a), and a short circuit anomaly occurs at timing (b). After the short circuit anomaly occurs, the current value of the current that flows in busbar 61 rises, and the current value of the current that flows in busbar 61 (i.e., the current value detected in shunt resistor 10) exceeds the threshold current value at timing (c). At this point, busbar 61 is not shut off immediately, and the microcomputer or the like determines at timing (d) that the current value detected in shunt resistor 10 has exceeded the threshold current value and shuts off busbar 61. This is so because it requires a certain amount of time for the microcomputer or the like to make the determination described above and to shut off busbar 61. Thereafter, the current that flows in busbar 61 becomes zero at timing (e).

FIG. 5B is a diagram showing another example of a change in the current that flows in busbar 61 when an anomaly occurs according to a comparative example. FIG. 5B shows a change in the current that flows in busbar 61 when relays 51 and 52 are off.

As shown in FIG. 5B, in one case, no current flows in busbar 61 in period (a), and a short circuit anomaly occurs at timing (b). After the short circuit anomaly occurs, the current value of the current that flows in busbar 61 rises, and the current value of the current that flows in busbar 61 (i.e., the current value detected in shunt resistor 10) exceeds the threshold current value at timing (c). At this point, busbar 61 is not shut off immediately, and the microcomputer or the like determines at timing (d) that the current value detected in shunt resistor 10 has exceeded the threshold current value and shuts off busbar 61. This is so because it requires a certain amount of time for the microcomputer or the like to make the determination described above and to shut off busbar 61. Thereafter, the current that flows in busbar 61 becomes zero at timing (e).

FIG. 6A is a diagram showing one example of a change in the current that flows in busbar 61 and in the current that flows in internal resistor 21a when an anomaly occurs according to Embodiment 1. FIG. 6A shows a change in the current that flows in busbar 61 when relays 51 and 52 are on.

According to Embodiment 1, no microcomputer or the like is provided that determines whether the current value detected in shunt resistor 10 has exceeded a threshold current value set in advance, and internal resistor 21a of pyroswitch 20 is connected in parallel to shunt resistor 10. As shown in FIG. 6A, a normal current flows in busbar 61 in period (a), and a current flows also in internal resistor 21a. In one case, a short circuit anomaly occurs at timing (b). After the short circuit anomaly occurs, the current value of the current that flows in busbar 61 rises. At this point, the current value of the current that flows in internal resistor 21a also rises. This is so because, as indicated by Equation 1 above, the current value of the current that flows in busbar 61 and the current value of the current that flows in internal resistor 21a are provided in a proportional relation. At timing (c), the current value of the current that flows in busbar 61 exceeds the anomalous current value (Ic) set for the current that flows in busbar 61. As indicated by Equation 2 above, since the resistance value of shunt resistor 10 is set such that the current value of the current that flows in internal resistor 21a exceeds the current value (Id) necessary for detonation when the current value of the current that flows in busbar 61 exceeds the anomalous current value (Ic) set for the current that flows in busbar 61, the current value of the current that flows in internal resistor 21a also exceeds the current value (Id) necessary for detonation at timing (c). Therefore, pyroswitch 20 performs detonation immediately after timing (c), and busbar 61 is shut off. Then, the current that flows in busbar 61 becomes zero at timing (d).

FIG. 6B is a diagram showing another example of a change in the current that flows in busbar 61 and in the current that flows in internal resistor 21a when an anomaly occurs according to Embodiment 1. FIG. 6B shows a change in the current that flows in busbar 61 when relays 51 and 52 are off.

As shown in FIG. 6B, no current flows in busbar 61 in period (a), and no current flows in internal resistor 21a, either. In one case, a short circuit anomaly occurs at timing (b). After the short circuit anomaly occurs, the current value of the current that flows in busbar 61 rises. At this point, the current value of the current that flows in internal resistor 21a also rises. This is so because, as indicated by Equation 1 above, the current value of the current that flows in busbar 61 and the current value of the current that flows in internal resistor 21a are provided in a proportional relation. At timing (c), the current value of the current that flows in busbar 61 exceeds the anomalous current value (Ic) set for the current that flows in busbar 61. As indicated by Equation 2 above, since the resistance value of shunt resistor 10 is set such that the current value of the current that flows in internal resistor 21a exceeds the current value (Id) necessary for detonation when the current value of the current that flows in busbar 61 exceeds the anomalous current value (Ic) set for the current that flows in busbar 61, the current value of the current that flows in internal resistor 21a also exceeds the current value (Id) necessary for detonation at timing (c). Therefore, pyroswitch 20 performs detonation immediately after timing (c), and busbar 61 is shut off. Then, the current that flows in busbar 61 becomes zero at timing (d).

In this manner, since no determination by a microcomputer or the like is made as to whether to shut off busbar 61 according to Embodiment 1, busbar 61 can be shut off immediately after the current value of the current that flows in busbar 61 becomes an anomalous value.

As described thus far, since shunt resistor 10 provided in busbar 61 and internal resistor 21a of pyroswitch 20 that performs detonation are connected in parallel to each other, the magnitude of the current that flows in internal resistor 21a can be varied in accordance with the magnitude of the current that flows in busbar 61. In other words, when the magnitude of the current that flows in busbar 61 increases to result in an overcurrent, the magnitude of the current that flows in internal resistor 21a can also be increased in accordance with the overcurrent, and then pyroswitch 20 can perform detonation to shut off busbar 61. To rephrase, when an overcurrent flows in busbar 61, pyroswitch 20 can automatically perform detonation with the use of the overcurrent that is normally not used. Therefore, since this configuration renders unnecessary a function that determines whether the current value detected in shunt resistor 10 has exceeded a threshold value set in advance, an energy source for instantly driving pyroswitch 20, or an isolation function between a high voltage portion and a low voltage portion, smaller, simpler shutoff system 1 can be implemented. For example, although an increase in the number of components leads to a greater concern for malfunction, the size reduction and the simplification achieved by shutoff system 1 can reduce the likelihood of malfunction. In particular, according to the present disclosure, the configuration in which shunt resistor 10 and internal resistor 21a are connected in parallel to each other enables the current value of the current that flows in shunt resistor 10 and the current value of the current that flows in internal resistor 21a to have a proportional relation and enables the current value of the current that flows in internal resistor 21a to automatically follow the current value of the current that flows in shunt resistor 10, and thus this configuration can reduce the likelihood of malfunction.

Now, another example of shutoff system 1 will be described below with reference to FIG. 7 and FIG. 8.

FIG. 7 and FIG. 8 are each a sectional view showing another example of shutoff system 1 according to Embodiment 1. FIG. 7 and FIG. 8 show the structure inside detonator 21 schematically and omit showing the sections of detonator 21 and of cutter 22.

As shown in FIG. 7, detonator 21 of pyroswitch 20 may be provided in a side wall of the housing of pyroswitch 20.

When shunt resistor 10 and detonator 21 are isolated by an isolation amplifier or the like, this configuration creates a large potential difference between busbar 61 provided with shunt resistor 10 and detonator 21, and in order to enhance the isolation performance between detonator 21 and busbar 61, detonator 21 is provided at a position in the housing (e.g., the top wall of the housing or the like) that is away from the housing's side walls that busbar 61 penetrates through. Meanwhile, since the potential difference between detonator 21 and busbar 61 is small according to the present disclosure and because the isolation function between a high voltage portion and a low voltage portion is unnecessary, detonator 21 can be provided in the housing's side wall that busbar 61 penetrates through. Accordingly, the distance between detonator 21 and busbar 61 can be reduced, and even smaller shutoff system 1 (e.g., smaller pyroswitch 20 to be more specific) can be obtained.

Alternatively, as shown in FIG. 8, shunt resistor 10 may be embedded in pyroswitch 20. For example, shunt resistor 10 is provided in a part of busbar 61 that is located inside pyroswitch 20. For example, a wire connecting shunt resistor 10 (terminals 10a and 10b to be more specific) and internal resistor 21a may be provided inside pyroswitch 20 or outside pyroswitch 20.

As shunt resistor 10 and pyroswitch 20 are provided integrated in this manner, even smaller shutoff system 1 can be obtained.

[Embodiment 2]

Embodiment 2 will be described below. First, some characteristics of relay 51 will be described. In the following description, relay 51 may instead be read as relay 52.

Relay 51 has, for example, a characteristic like the one shown in FIG. 9.

FIG. 9 is a diagram showing one example of a characteristic of relay 51.

For example, although relay 51 can be turned on and off normally when a current that is large to a certain extent flows in busbar 61 for a short period of time, relay 51 may fail (e.g., become unable to be turned off) upon being fused or exploding when a current that is large to a certain extent flows in busbar 61 continuously. In the following description, a current that is smaller than an overcurrent that may cause pyroswitch 20 to perform detonation but that is large to a certain extent is referred to as a semi-large current.

Although it is conceivable to avoid such a failure, for example, by using a large capacity relay for relay 51, this configuration can lead to a larger, higher costing shutoff system.

It is also conceivable to shut off busbar 61 before relay 51 fails, for example, by adjusting the resistance value of shunt resistor 10 so as to cause pyroswitch 20 to perform detonation when a semi-large current flows in busbar 61. However, since such a semi-large current can flow momentarily when the vehicle starts or accelerates, in this case, pyroswitch 20 may perform detonation even when the vehicle is operating normally as in when it starts or accelerates. Meanwhile, if the resistance value of shunt resistor 10 is adjusted so as not to cause pyroswitch 20 to perform detonation even when a semi-large current flows in busbar 61, there is a chance that a semi-large current flows continuously, as described above, and relay 51 fails.

Therefore, a shutoff system described below according to Embodiment 2 is configured to be able to refrain from shutting off busbar 61 when a semi-large current flows in busbar 61 momentarily and to shut off busbar 61 before relay 51 fails when a semi-large current flows in busbar 61 continuously.

FIG. 10 is a sectional view showing one example of shutoff system 2 according to Embodiment 2.

Shutoff system 2 differs from shutoff system 1 according to Embodiment 1 in that shutoff system 2 further includes blowout fuse 70. Since other features are identical to the counterparts according to Embodiment 1, the description thereof will be omitted, and the following description centers on the differences.

Blowout fuse 70 is connected in parallel to shunt resistor 10 and internal resistor 21a of pyroswitch 20. Now, some characteristics of blowout fuse 70 will be described with reference to FIG. 11.

FIG. 11 is a diagram showing one example of a characteristic of blowout fuse 70 according to Embodiment 2.

As shown in FIG. 11, blowout fuse 70 has a characteristic that it blows out when a current of a specific magnitude flows therein for a predefined period of time. For example, such blowout fuse 70 is used that has a characteristic that it blows out before relay 51 fails when a semi-large current flows in busbar 61 for a predefined period of time.

FIG. 12 is an equivalent circuit diagram showing one example of the part where shunt resistor 10, internal resistor 21a, and blowout fuse 70 are provided in shutoff system 2 according to Embodiment 2.

As can be seen in the equivalent circuit diagram of FIG. 12 as well, shunt resistor 10, internal resistor 21a, and blowout fuse 70 are connected in parallel to each other.

As shown in FIG. 12, current Is of a current value that is based on resistance value Rs of shunt resistor 10 flows in shunt resistor 10, current Ip of a current value that is based on resistance value Rp of internal resistor 21a flows in internal resistor 21a, and current If of a current value that is based on resistance value Rf of blowout fuse 70 flows in blowout fuse 70.

Now, how shutoff system 2 operates when an anomaly that a semi-large current flows in busbar 61 continuously occurs will be described with reference to FIG. 13A to FIG. 13C.

FIG. 13A to FIG. 13C are diagrams for describing a change in the current that flows in shunt resistor 10, in the current that flows in internal resistor 21a, and in the current that flows in blowout fuse 70 when an anomaly occurs according to Embodiment 2. FIG. 13A shows currents Is, Ip, and If that flow in, respectively, shunt resistor 10, internal resistor 21a, and blowout fuse 70 before blowout fuse 70 blows out. FIG. 13B shows currents Is, Ip, and If that flow in, respectively, shunt resistor 10, internal resistor 21a, and blowout fuse 70 at the moment when blowout fuse 70 blows out. FIG. 13C shows currents Is, Ip, and If that flow in, respectively, shunt resistor 10, internal resistor 21a, and blowout fuse 70 immediately after blowout fuse 70 blows out. Current Is is indicated by the solid line, current If is indicated by the dashed line, and current Ip is indicated by the dashed-dotted line.

As shown in FIG. 13A, when a semi-large current flows in busbar 61 continuously, currents Is, If, and Ip corresponding to the magnitude of the semi-large current flow in, respectively, shunt resistor 10, blowout fuse 70, and internal resistor 21a. Then, as shown in FIG. 13B, when blowout fuse 70 blows out by current If, current If that flows in blowout fuse 70 becomes zero. Along with this, as shown in FIG. 13C, the current value of current Ip that flows in internal resistor 21a connected in parallel to blowout fuse 70 rises, and as internal resistor 21a becomes overheated, pyroswitch 20 performs detonation. With this operation, busbar 61 can be shut off before relay 51 fails as a semi-large current flows in busbar 61 continuously.

Herein, blowout fuse 70 does not blow out when a semi-large current flows in busbar 61 momentarily as in when the vehicle starts or accelerates, and the current value of current Ip that flows in internal resistor 21a connected in parallel to blowout fuse 70 does not rise. Therefore, pyroswitch 20 does not perform detonation. Meanwhile, blowout fuse 70 blows out instantly when an overcurrent caused, for example, by a short circuit anomaly flows in busbar 61, and the current value of current Ip that flows in internal resistor 21a connected in parallel to blowout fuse 70 rises. Therefore, internal resistor 21a becomes overheated, and pyroswitch 20 performs detonation.

Next, another example of shutoff system 2 according to Embodiment 2 will be described with reference to FIG. 14A to FIG. 14C.

FIG. 14A to FIG. 14C are each an equivalent circuit diagram showing another example of the part where shunt resistor 10, internal resistor 21a, and blowout fuse 70 are provided in shutoff system 2 according to Embodiment 2.

For example, shutoff system 2 may further include a load connected in series to at least blowout fuse 70. Herein, this load may be connected in series to a circuit in which blowout fuse 70 and internal resistor 21a are connected in parallel to each other or may include a resistor or an inductor.

For example, as shown in FIG. 14A, shutoff system 2 may include, as the aforementioned load, resistor 80a connected in series to blowout fuse 70. This configuration makes it possible to adjust the amount of the current that flows in blowout fuse 70 by resistor 80a and, for example, to adjust the length of time till blowout fuse 70 blows out.

For example, as shown in FIG. 14B, shutoff system 2 may include, as the aforementioned load, resistor 80b connected in series to a circuit in which blowout fuse 70 and internal resistor 21a are connected in parallel to each other. This configuration makes it possible to adjust the amount of the current that flows in blowout fuse 70 and internal resistor 21a by resistor 80b and, for example, to adjust the length of time till blowout fuse 70 blows out and the current value at which pyrofuse 20 performs detonation. Herein, a resistor may be connected in series to each of blowout fuse 70 and internal resistor 21a, and the amount of the current that flows in blowout fuse 70 and the amount of the current that flows in internal resistor 21a may each be made adjustable independently of each other.

For example, as shown in FIG. 14C, shutoff system 2 may include, as the aforementioned load, inductor 80c connected in series to a circuit in which blowout fuse 70 and internal resistor 21a are connected in parallel to each other. This configuration makes it possible to prevent, by inductor 80c, a transient change in the current that flows in blowout fuse 70 and internal resistor 21a and to prevent blowout fuse 70 from blowing out erroneously by noise or prevent pyrofuse 20 from erroneously performing detonation. Herein, an inductor may be connected in series to each of blowout fuse 70 and internal resistor 21a, and the transient change in the current that flows in blowout fuse 70 and the transient change in the current that flows in internal resistor 21a may each be made preventable independently of each other.

Furthermore, although the illustration is omitted, shutoff system 2 may include both a resistor and an inductor as the aforementioned load.

As described thus far, there is a case, for example, in which a semi-large current that is smaller than an overcurrent that may cause pyroswitch 20 to perform detonation but that is large to a certain extent flows in busbar 61 continuously. In such a case, when relay 51 is provided in busbar 61, relay 51 may fail by becoming fused or exploding. To counter this, blowout fuse 70 having a characteristic that it blows out when a current of a specific magnitude flows therein for a predefined period of time is connected in parallel to shunt resistor 10 and internal resistor 21a of pyroswitch 20. With this configuration, when a semi-large current flows in busbar 61 for a predefined period time, blowout fuse 70 blows out first, and along with this blowout, the current that was flowing in blowout fuse 70 flows in internal resistor 21a of pyroswitch 20 connected in parallel to blowout fuse 70. Thus, internal resistor 21a becomes overheated, and pyroswitch 20 performs detonation. Furthermore, blowout fuse 70 does not blow out when a semi-large current flows momentarily as in when the vehicle starts or accelerates, and the current value of the current that flows in internal resistor 21a connected in parallel to blowout fuse 70 does not rise. Therefore, pyroswitch 20 does not perform detonation. Accordingly, the configuration described above makes it possible to keep busbar 61 from being shut off when a semi-large current flows momentarily and to shut off busbar 61 before relay 51 fails when a semi-large current flows continuously.

(Other Embodiments)

Thus far, some embodiments have been described to illustrate the techniques according to the present disclosure. The techniques according to the present disclosure, however, are not limited to these embodiments and can also be applied to an embodiment that includes, for example, modifications, substitutions, additions, or omissions as appropriate. For example, the following variations are also encompassed by an embodiment of the present disclosure.

For example, although the resistance value of shunt resistor 10 in the examples described according to the foregoing embodiments is expressed by Rs = Rp × Id/(Ic - Id), the resistance value may instead be expressed by Rs = Rp × Id/Ic. This is so because it is often the case that the current value (Id), of the current that flows in internal resistor 21a, that is necessary for detonation is extremely smaller than the anomalous current value (Ic) set for the current that flows in busbar 61 and because it is possible to state that Ic - Id ≈ Ic.

An embodiment obtained by making various modifications that a person skilled in the art can conceive of to the foregoing embodiments or an embodiment achieved by combining, as desired, the constituent elements and the functions in the foregoing embodiments within the scope that does not depart from the spirit of the present disclosure is also encompassed by the present disclosure.

(Supplementary Notes)

Through the description of the foregoing embodiments, the following techniques are disclosed.

(Technique 1) A shutoff system that shuts off a current path, the shutoff system comprising: a shunt resistor provided in the current path; and a pyroswitch that includes an internal resistor and shuts off the current path by performing detonation in accordance with a current that flows in the internal resistor, wherein the shunt resistor and the internal resistor are connected in parallel to each other.

According to this configuration, since the shunt resistor provided in the current path and the internal resistor of the pyroswitch for performing detonation are connected in parallel to each other, the magnitude of the current that flows in the internal resistor can be varied in accordance with the magnitude of the current that flows in the current path. In other words, when the magnitude of the current that flows in the current path increases to result in an overcurrent, the magnitude of the current that flows in the internal resistor can also be increased in accordance with the overcurrent, and then the pyroswitch can perform detonation to shut off the current path. To rephrase, when an overcurrent flows in the current path, the pyroswitch can automatically perform detonation with the use of the overcurrent that is normally not used. Therefore, since this configuration renders unnecessary a function that determines whether the current value detected in the shunt resistor has exceeded a threshold value set in advance, an energy source for instantly driving the pyroswitch, or an isolation function between a high voltage portion and a low voltage portion, a smaller, simpler shutoff system can be implemented.

(Technique 2) The shutoff system according to technique 1, wherein a resistance value of the shunt resistor is a value that is based on a resistance value of the internal resistor, an anomalous current value set for a current that flows in the current path, and a current value, of the current that flows in the internal resistor, that is necessary for detonation.

According to this configuration, the anomalous current value at which the current path should be shut off can be set by adjusting the resistance value of the shunt resistor.

(Technique 3) The shutoff system according to technique 2, wherein the shutoff system varies a magnitude of the current that flows in the internal resistor in accordance with a magnitude of the current that flows in the current path.

Since the shunt resistor and the internal resistor are connected in parallel to each other, the magnitude of the current that flows in the internal resistor can be varied in accordance with the magnitude of the current that flows in the current path.

(Technique 4) The shutoff system according to technique 3, wherein when an overcurrent of the anomalous current value flows in the current path, the pyroswitch performs detonation with the overcurrent.

According to this configuration, when an overcurrent flows in the current path, the current path can be shut off by performing detonation with the overcurrent.

(Technique 5) The shutoff system according to technique 3 or 4, wherein the current path is a busbar.

In this manner, the current path may be a busbar.

(Technique 6) The shutoff system according to any one of techniques 2 to 5, wherein when the resistance value of the shunt resistor is denoted by Rs, the resistance value of the internal resistor is denoted by Rp, the anomalous current value set for the current that flows in the current path is denoted by Ic, and the current value, of the current that flows in the internal resistor, that is necessary for detonation is denoted by Id, the resistance value of the shunt resistor is expressed by the equation Rs = Rp × Id/(Ic - Id).

According to this configuration, the anomalous current value at which the current path should be shut off can be set by adjusting the resistance value of the shunt resistor through the equation above.

(Technique 7) The shutoff system according to any one of techniques 2 to 5, wherein when the resistance value of the shunt resistor is denoted by Rs, the resistance value of the internal resistor is denoted by Rp, the anomalous current value set for the current that flows in the current path is denoted by Ic, and the current value, of the current that flows in the internal resistor, that is necessary for detonation is denoted by Id, the resistance value of the shunt resistor is expressed by the equation Rs = Rp × Id/Ic.

According to this configuration, the anomalous current value at which the current path should be shut off can be set by adjusting the resistance value of the shunt resistor through the equation above.

(Technique 8) The shutoff system according to any one of techniques 1 to 7, wherein the shunt resistor is embedded in the pyroswitch.

According to this configuration, as the shunt resistor and the pyroswitch are provided integrated in this manner, an even smaller shutoff system can be obtained.

(Technique 9) The shutoff system according to any one of techniques 1 to 8, wherein the pyroswitch includes: a detonator that performs detonation and in which the internal resistor is provided; and a housing, wherein the current path extends to penetrate through a side wall of the housing, and the detonator is provided in the side wall.

When the shunt resistor and the detonator are isolated by an isolation amplifier or the like, this configuration creates a large potential difference between the current path provided with the shunt resistor and the detonator, and in order to enhance the isolation performance between the detonator and the current path, the detonator is provided at a position in the housing (e.g., the top wall of the housing or the like) that is away from the housing's side wall that the current path penetrates through. Meanwhile, since the potential difference between the detonator and the current path is small according to the present disclosure and the isolation function between a high voltage portion and a low voltage portion is unnecessary, the detonator can be provided in the housing's side wall that the current path penetrates through. Accordingly, the distance between the detonator and the current path can be reduced, and an even smaller shutoff system (a smaller pyroswitch to be more specific) can be obtained.

(Technique 10) The shutoff system according to any one of techniques 1 to 9, further comprising: a blowout fuse, wherein the blowout fuse is connected in parallel to the shunt resistor and the internal resistor.

There is a case, for example, in which a current (a semi-large current) that is smaller than an overcurrent that may cause the pyroswitch to perform detonation but that is large to a certain extent flows in the current path continuously. In such a case, if a relay is provided in the current path, the relay may fail by becoming fused or exploding. To counter this, the blowout fuse having a characteristic that it blows out when a current of a specific magnitude flows therein for a predefined period of time is connected in parallel to the shunt resistor and the internal resistor of the pyroswitch. With this configuration, when a semi-large current flows in the current path for a predefined period time, the blowout fuse blows out first, and along with this blowout, the current that was flowing in the blowout fuse flows in the internal resistor of the pyroswitch connected in parallel to the blowout fuse. Thus, the pyroswitch performs detonation. Furthermore, the blowout fuse does not blow out when a semi-large current flows momentarily as in when the vehicle starts or accelerates, and the current value of the current that flows in the internal resistor connected in parallel to the blowout fuse does not rise. Therefore, the pyroswitch does not perform detonation. Accordingly, the configuration described above makes it possible to keep the current path from being shut off when a semi-large current flows momentarily and to shut off the current path before the relay fails when a semi-large current flows continuously.

(Technique 11) The shutoff system according to technique 10, further comprising: a load connected in series to the blowout fuse.

According to this configuration, it becomes possible to adjust the amount of the current that flows in the blowout fuse or to prevent a transient change.

(Technique 12) The shutoff system according to technique 11, wherein the load is connected in series to a circuit in which the blowout fuse and the internal resistor are connected in parallel to each other.

According to this configuration, it becomes possible to adjust the amount of the current that flows in the blowout fuse and the internal resistor of the pyroswitch or to prevent a transient change.

(Technique 13) The shutoff system according to technique 11 or 12, wherein the load includes a resistor.

According to this configuration, it becomes possible to adjust the amount of current by the resistor.

(Technique 14) The shutoff system according to any one of techniques 11 to 13, wherein the load includes an inductor.

According to this configuration, it becomes possible to prevent a transient change in the current by the inductor.

[Industrial Applicability]

The present disclosure can be applied, for example, to a system that shuts off a current path by driving a pyroswitch.

[Reference Signs List]

1 shutoff system
10 shunt resistor
10a, 10b terminal
20 pyroswitch
21 detonator
21a internal resistor
21b explosive charge
22 cutter
30 battery
40 load
51, 52 relay
61, 62 busbar
70 blowout fuse
80a, 80b resistor
80c inductor

## Claims

1. A shutoff system that shuts off a current path, the shutoff system comprising:

   a shunt resistor provided in the current path; and
   a pyroswitch that includes an internal resistor and shuts off the current path by performing detonation in accordance with a current that flows in the internal resistor, wherein
   the shunt resistor and the internal resistor are connected in parallel to each other.

2. The shutoff system according to claim 1, wherein
   a resistance value of the shunt resistor is a value that is based on a resistance value of the internal resistor, an anomalous current value set for a current that flows in the current path, and a current value, of the current that flows in the internal resistor, that is necessary for detonation.

3. The shutoff system according to claim 2, wherein
   the shutoff system varies a magnitude of the current that flows in the internal resistor in accordance with a magnitude of the current that flows in the current path.

4. The shutoff system according to claim 3, wherein
   when an overcurrent of the anomalous current value flows in the current path, the pyroswitch performs detonation with the overcurrent.

5. The shutoff system according to claim 3 or 4, wherein
   the current path is a busbar.

6. The shutoff system according to any one of claims 2 to 5, wherein
   the resistance value of the shunt resistor is expressed by the following equation:

$$Rs = Rp \times Id/(Ic - Id),$$

   where Rs denotes the resistance value of the shunt resistor,
   Rp denotes the resistance value of the internal resistor, Ic denotes the anomalous current value set for the current that flows in the current path, and
   Id denotes the current value, of the current that flows in the internal resistor, that is necessary for detonation.

7. The shutoff system according to any one of claims 2 to 5, wherein
   the resistance value of the shunt resistor is expressed by the following equation:

$$Rs = Rp \times Id/Ic$$

where Rs denotes the resistance value of the shunt resistor,
Rp denotes the resistance value of the internal resistor, Ic denotes the anomalous current value set for the current that flows in the current path, and
Id denotes the current value, of the current that flows in the internal resistor, that is necessary for detonation.

8. The shutoff system according to any one of claims 1 to 7, wherein
the shunt resistor is embedded in the pyroswitch.

9. The shutoff system according to any one of claims 1 to 8, wherein

the pyroswitch includes:

a detonator that performs detonation and in which the internal resistor is provided; and
a housing,

the current path extends to penetrate through a side wall of the housing, and
the detonator is provided in the side wall.

10. The shutoff system according to any one of claims 1 to 9, further comprising:

a blowout fuse, wherein
the blowout fuse is connected in parallel to the shunt resistor and the internal resistor.

11. The shutoff system according to claim 10, further comprising:
a load connected in series to at least the blowout fuse.

12. The shutoff system according to claim 11, wherein
the load is connected in series to a circuit in which the blowout fuse and the internal resistor are connected in parallel to each other.

13. The shutoff system according to claim 11 or 12, wherein
the load includes a resistor.

14. The shutoff system according to any one of claims 11 to 13, wherein
the load includes an inductor.

FIG. 1

FIG. 2

EP 4 572 054 A1

FIG. 3

# FIG. 4

# FIG. 5A

# FIG. 5B

## FIG. 6A

## FIG. 6B

FIG. 7

EP 4 572 054 A1

FIG. 8

FIG. 9

Fails
(Cannot be
turned off)

Relay
current
value

Can be
turned on/off

Duration for
which current
keeps flowing

FIG. 10

# FIG. 11

Fuse current value

Blows out

Turn on electricity

Duration for which current keeps flowing

# FIG. 12

70

Rf

If

Rp

Ip

61

21a

I

Rs

Is

10

## FIG. 13A

## FIG. 13B

## FIG. 13C

## FIG. 14A

## FIG. 14B

## FIG. 14C

## INTERNATIONAL SEARCH REPORT

International application No.

**PCT/JP2023/025997**

| A. | CLASSIFICATION OF SUBJECT MATTER |
|---|---|

***H02H 3/087***(2006.01)i; ***B60R 16/02***(2006.01)i; ***H02H 7/18***(2006.01)i; ***H02J 1/00***(2006.01)i
FI:   H02H3/087; B60R16/02 650V; H02H7/18; H02J1/00 301D

According to International Patent Classification (IPC) or to both national classification and IPC

| B. | FIELDS SEARCHED |
|---|---|

Minimum documentation searched (classification system followed by classification symbols)

H02H3/087; B60R16/02; H02H7/18; H02J1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2017/030035 A1 (AUTONETWORKS TECHNOLOGIES LTD) 23 February 2017 (2017-02-23)<br>paragraphs [0001]-[0063], fig. 1-4 | 1-14 |
| A | WO 2020/026862 A1 (PANASONIC IP MAN CO LTD) 06 February 2020 (2020-02-06)<br>paragraphs [0001]-[0312], fig. 1-40 | 1-14 |
| A | JP 8-205411 A (FUJI ELECTRIC CO LTD) 09 August 1996 (1996-08-09)<br>paragraphs [0001]-[0027], fig. 1-6 | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 September 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/025997**

| Patent document cited in search report | | | Publication date (day/month/year) | Patent family member(s) | | | Publication date (day/month/year) |
|---|---|---|---|---|---|---|---|
| WO | 2017/030035 | A1 | 23 February 2017 | US | 2018/0248354 | A1 | |
| | | | | paragraphs [0001]-[0088], fig. 1-4 | | | |
| | | | | CN | 107925257 | A | |
| | | | | JP | 2017-41987 | A | |
| WO | 2020/026862 | A1 | 06 February 2020 | US | 2021/0304974 | A1 | |
| | | | | paragraphs [0001]-[0381], fig. 1-40 | | | |
| | | | | EP | 3832684 | A1 | |
| | | | | CN | 112437966 | A | |
| JP | 8-205411 | A | 09 August 1996 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020100339 A